Europäisches Patentamt

(19) European Patent Office

Office européen des brevets

(11) Veröffentlichungsnummer: **0 028 808**
**B1**

(12) **EUROPÄISCHE PATENTSCHRIFT**

(45) Veröffentlichungstag der Patentschrift:
14.03.84

(51) Int. Cl.³: **B 29 D  27/02,** B 29 B  1/06,
B 29 B  5/06, F 04 B  13/02

(21) Anmeldenummer: 80106821.4

(22) Anmeldetag: 05.11.80

(54) **Vorrichtung zum Fördern und Dosieren abrasiver Materialien.**

(30) Priorität: 09.11.79 DE 2945283

(43) Veröffentlichungstag der Anmeldung:
20.05.81 Patentblatt 81/20

(45) Bekanntmachung des Hinweises auf die Patenterteilung:
14.03.84 Patentblatt 84/11

(84) Benannte Vertragsstaaten:
CH FR GB IT LI SE

(56) Entgegenhaltungen:
DD - A - 64 563
DE - A - 2 803 311
DE - A - 2 823 761
DE - A - 2 917 865
GB - A - 1 296 355
US - A - 3 777 943
US - A - 3 802 805

(73) Patentinhaber: **SIEMENS AKTIENGESELLSCHAFT,
Berlin und München Wittelsbacherplatz 2,
D-8000 München 2 (DE)**

(72) Erfinder: **Heinzl, Alfred, Ing.grad., Geigenberger
Strasse 29, D-8000 München 71 (DE)**
Erfinder: **Stadler, Heinz, Mettnauer Strasse 19,
D-8000 München 60 (DE)**

## Vorrichtung zum Fördern und Dosieren abrasiver Materialien

Die Erfindung bezieht sich auf eine Vorrichtung zum Fördern und Dosieren abrasiver Materialien, wie Gießharzen und dergleichen, mit mindestens einer Kolbenpumpe, deren Zylinderraum eine Führung für einen Kolben bildet, über eine Eingangsöffnung mit einem Vorratsbehälter in Verbindung steht und eine Ausgangsöffnung besitzt.

Zum Dosieren flüssiger Medien sind bereits verschiedene Kolbenpumpen bekannt. Das Problem dabei besteht in der Kolbenabdichtung, da bei diesen bekannten Pumpen jeweils die Kolbenführung in die Atmosphäre mündet. Es ist zwar möglich, etwa mit elastischen Dichtungen eine gute Abdichtung zu erreichen, doch werden diese Dichtungen von bestimmten Fördermedien leicht angegriffen und zerstört. Dies gilt beispielsweise für Gießharze, denen Füllstoffe wie Quarzsand und dergleichen beigemengt sind. Diese Füllstoffe reiben zwischen Kolben und Zylinder und zerstören die Dichtungen; die Folge ist, daß die Pumpe leckt und Luft ansaugt.

In der US-A-3 777 943 ist bereits eine Förderpumpe zum Dosieren von geschmolzenem Metall beschrieben. Dort ist ein teilweise hohler Kolben verwendet, der an seiner offenen Stirnseite ein Kugelventil besitzt. Beim Zurückziehen des Kolbens dringt das flüssige Metall über eine seitliche Öffnung in den Kolbenhohlraum ein und strömt an dessen offenem Ende aus ihm heraus. Damit liegt die Kolbenführung ständig im flüssigen Medium, so daß keine Luft angesaugt werden kann. Allerdings ist der Kolben sehr eng in seine Führung eingepaßt, so daß mit dieser bekannten Förderpumpe abrasive Materialien nur unter hohem Verschleiß verarbeitet werden könnten.

Aufgabe der Erfindung ist es, eine Förder- und Dosiereinrichtung mit mindestens einer Kolbenpumpe zu schaffen, die eine hohe Dosiergenauigkeit ermöglicht und vor allem das Verarbeiten abrasiver Medien gestattet, ohne daß diese zu Abnutzungen oder Sedimentationen führen.

Erfindungsgemäß wird diese Aufgabe mit einer Vorrichtung der eingangs genannten Art dadurch gelöst, daß der Kolben insgesamt rohrförmig ausgebildet ist, im Bereich der Eingangsöffnung Wanddurchbrüche besitzt und an seiner auslaßseitigen Stirnseite mit einem im geöffneten Zustand das Einströmen des Mediums in den Zylinder ermöglichenden Einlaßventil verschließbar ist, daß der Führungsspalt zwischen dem Kolben und dem Zylinder größer ist als die Körnung eines im flüssigen Fördermedium befindlichen Füllstoffes und daß die tragende Länge der Kolbenführung in Abhängigkeit von dem flüssigen Fördermedium so bemessen ist, daß der auftretende Schlupf die Dosiergenauigkeit nicht beeinträchtigt.

Bei der erfindungsgemäßen Dosiervorrichtung ist also eine Kolbenpumpe vorgesehen, bei der das Fördermedium in an sich bekannter Weise durch Wandöffnungen des Kolbens in das Kolbeninnere und von dort über ein Ventil in den Zylinderraum gesaugt wird. Die Kolbendichtung befindet sich also zwischen der Eingangsöffnung und dem freien Stirnende des Kolbens im Zylinderraum, so daß der Dichtungsbereich des Kolbens stets völlig im Fördermedium liegt.

Damit arbeitet die Pumpe leckfrei und kann keine Luft ansaugen. Darüber hinaus ist aber der Führungsspalt zwischen Kolben und Zylinder größer als die Körnung des im Fördermedium befindlichen Füllstoffes. So wird gewährleistet, daß Kolben und Kolbenabdichtung nicht aneinander reiben. Man verzichtet also dabei auf eine elastische Dichtung zwischen dem Kolben und dem Zylinder und nimmt dabei einen gewissen Schlupf in Kauf. Dieser Schlupf wird aber durch entsprechende Wahl der Führungslänge innerhalb der zulässigen Toleranzgrenzen gehalten.

Zweckmäßigerweise ist der Zylinder im Bereich der Einlaßöffnung zu einer ringförmigen Vorratszone erweitert. In diese Vorratszone strömt das Fördermedium aus dem Vorratsbehälter ein und verteilt sich rings um den Kolben, so daß es von allen Seiten gleichmäßig durch die Wanddurchbrüche in das Kolbeninnere einfließen kann.

Das Einlaßventil am stirnseitigen Ende des Kolbens kann über eine Feder betätigbar sein. In einer besonders zweckmäßigen Ausführungsform ist jedoch vorgesehen, daß dieses Einlaßventil über eine im Kolbeninneren angeordnete Stange betätigbar ist. Damit läßt sich eine besonders hohe Dosiergenauigkeit erreichen. Zur Vermeidung von Ablagerungen auf dem Einlaßventil im Kolbeninneren ist es weiterhin zweckmäßig, daß das Einlaßventil im Ruhezustand stets über eine Betätigungsvorrichtung geöffnet gehalten wird. Dadurch können auch eventuell entstehende Luftblasen aufsteigen.

Die Ausgangsöffnung ist zweckmäßigerweise mit einem federbetätigten Auslaßventil verschließbar. Ein solches Auslaßventil ist in bestimmten Fällen entbehrlich, wenn die Ausgangsöffnung in ein Rohr mit hinreichend großem Widerstand mündet.

Zweckmäßigerweise wird die Kolbenachse senkrecht angeordnet, so daß die Kanäle im Zylinderraum senkrecht und ohne Hinterschneidungen ausgeführt werden können. Damit werden Ablagerungen von Füllstoffen in der Pumpe vermieden. Zusätzlich ist es von Vorteil, wenn die Wanddurchbrüche abgeschrägte bzw. abgerundete Kanten besitzen.

Die erfindungsgemäße Vorrichtung kann in vorteilhafter Weise zwei oder mehrere Pumpen besitzen, deren Eingänge an getrennte Vorratsbehälter und deren Ausgänge einer gemeinsamen Mischeinrichtung angeschlossen sind. Damit können verschiedene Stoffe im vorgegebenen Verhältnis dosiert und miteinander gemischt werden. Beispielsweise kann über die eine Dosierpumpe Gießharz mit einem Füllstoff und über eine zweite Dosierpumpe ein Härter zugeführt und in der nachgeordneten Mischeinrichtung zur Verarbeitung gemischt werden. Zweckmäßig ist es dabei, daß die Kolben der Pumpen über eine gemeinsame Hebelvorrichtung betätigbar sind. Dabei können über diese Hebevorrichtung auch unterschiedliche Kolbenhübe zur Erzielung eines bestimmten Mischungsverhältnisses eingestellt werden.

Die Erfindung wird nachfolgend an Ausführungsbeispielen anhand der Zeichnung näher erläutert. Es zeigt

Fig. 1 eine erfindungsgemäß verwendbare Kolbenpumpe,

Fig. 2 eine erfindungsgemäße Dosiervorrichtung mit zwei Pumpen.

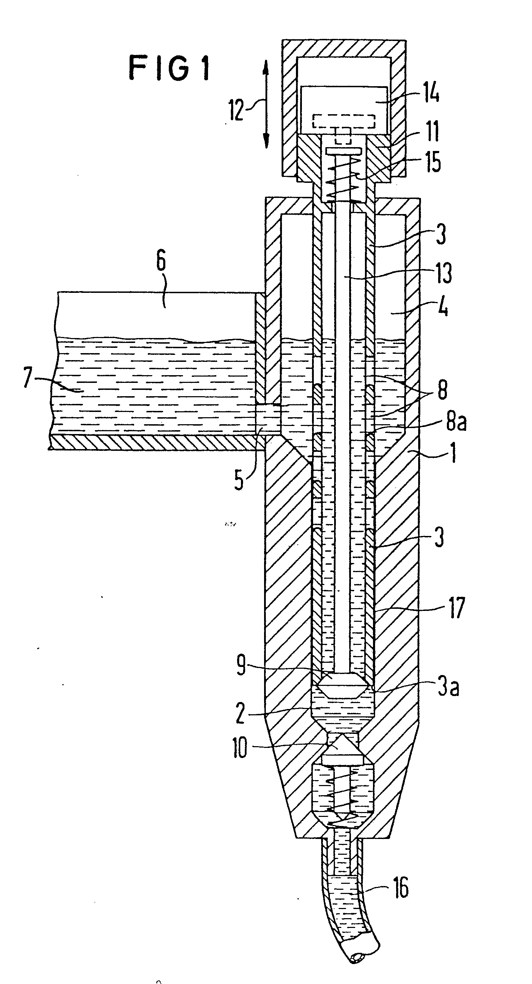

Die Fig. 1 zeigt eine Kolbenpumpe mit einem Gehäuse 1, in deren Zylinderraum 2 ein Kolben 3 verschiebbar gelagert ist. Der Zylinderraum 2 ist nach oben zu einer ringförmigen Vorratszone 4 erweitert, welche über eine Eingangsöffnung 5 mit einem Vorratsbehälter 6 in Verbindung steht. Über diese Eingangsöffnung 5 strömt das Fördermedium 7, beispielsweise Gießharz in das Pumpengehäuse.

Der Kolben 3 ist rohrförmig ausgebildet und besitzt im Bereich der Eingangsöffnung 5 bzw. der Vorratszone 4 Wanddurchbrüche 8, durch welche das Fördermedium in das Kolbeninnere einfließt. An seiner Stirnseite 3a ist der Kolben 3 mit einem Einlaßventil 9 verschließbar. Wird dieses Ventil geöffnet, kann das Fördermedium aus dem Kolbeninneren in den Zylinderraum einströmen. Nach unten ist der Zylinderraum durch ein federbetätigtes Auslaßventil 10 verschließbar. Der Kolben 3 ist über seinen Kopf 11 von außen in Richtung des Doppelpfeiles 12 verschiebbar. Unabhängig von der Kolbenbewegung kann aber das Einlaßventil 9 über die Ventilstange 13 durch eine Betätigungsvorrichtung 14, beispielsweise einen Druckluftzylinder, geöffnet oder geschlossen werden. Diese Betätigungsvorrichtung wirkt dabei gegen die Feder 15, welche das Ventil 9 nach oben vorspannt und damit den Kolben stirnseitig schließt.

Im Ruhezustand ist das Einlaßventil 9 durch den Druckluftzylinder 14 geöffnet, so daß sich auf dem Ventil keine Ablagerungen bilden und daß Luftblasen aufsteigen können. Zum Ansaugen wird der Kolben 3 bei geöffnetem Einlaßventil 9 nach oben bewegt. Dabei wird das zu fördernde Medium aus dem Vorratsbehälter 6 bzw. der Vorratszone 4 durch die Wanddurchbrüche 8 in den Kolben und durch die Ventilöffnung in den Zylinderraum 2 gesaugt. Zum anschließenden Pumpen wird zunächst das Einlaßventil 9 geschlossen. Das geschieht durch Entlüften des Druckluftzylinders 14, wobei die Feder 15 die Ventilstange 13 nach oben zieht. Danach wird der Kolben 3 nach unten bewegt, wobei er das Medium durch das Auslaßventil 10 zum Ausgang 16 preßt.

Da der Kolben 3 im Bereich seiner Dichtungszone 17 stets völlig vom Fördermedium umgeben ist, arbeitet die Pumpe leckfrei. Sie hat also keinen abzudichtenden Ausgang zur Atmosphäre. Der im Bereich der Dichtungszone 17 auftretende Schlupf, der von der Viskosität des Fördermediums abhängt, kann durch entsprechende Bemessung der tragenden Länge so klein gehalten werden, daß er die Dosiergenauigkeit nicht beeinträchtigt. Bei der Verarbeitung abrasiver Medien wird im übrigen der Dichtungsspalt 17 zwischen Zylinder und Kolben größer bemessen als die Körnung des im Medium befindlichen Füllstoffes. Dadurch vermeidet man einen Abrieb in der Kolbenführung.

Zur Vermeidung von Ablagerungen ist die Pumpe mit senkrechter Achse so ausgeführt, daß keine waagrechten Kanäle oder Hinterschneidungen, abgesehen von der kurzen Eingangsöffnung 5, vorhanden sind. Im Vorratsbehälter 6 selbst können Ablagerungen durch ein Rührwerk vermieden werden. Die Unterkanten 8a der Wanddurchbrüche 8 sind im übrigen abgerundet oder abgeschrägt, so daß sich auch an ihnen keine Füllstoffe des Fördermediums ablagern können.

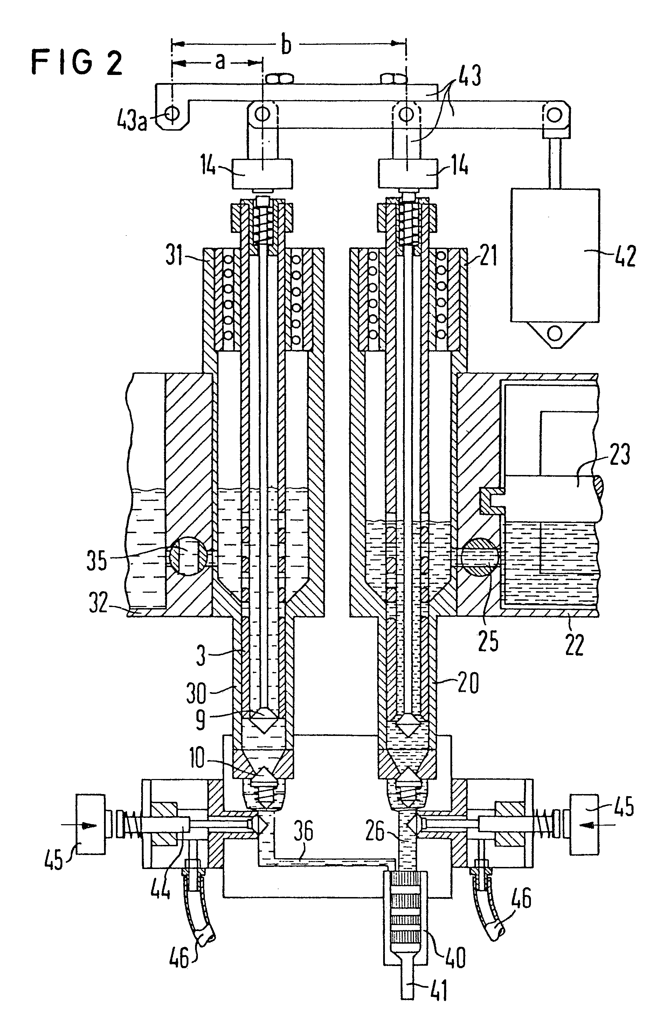

In Fig. 2 ist der Einsatz zweier Pumpen gemäß Fig. 1 in einer Dosier- und Mischanlage gezeigt. Dabei sind die Pumpen 20 und 30 im wesentlichen wie in Fig. 1 aufgebaut mit je einem Gehäuse 21 bzw. 31, wobei in dem jeweiligen Gehäuse ein Kolben 3 mit einem Einlaßventil 9 und einem Auslaßventil 10 vorgesehen ist. Die Pumpe 20 ist mit einem Vorratsbehälter 22 verbunden, in welchem beispielsweise ein Vorrat an Gießharz mit Quarzmehl als Füllstoff bereitgehalten wird. Durch ein waagrecht liegendes Rührwerk 23 wird das Entmischen und die Sedimentation von Füllstoffen im Vorratsbehälter verhindert. Das Gießharz wird über die Eingangsöffnung 25 in die Pumpe 20 gefördert.

Entsprechend ist die Pumpe 30 an einem Vorratsbehälter 32 angeschlossen, welcher beispielsweise mit einem Härter gefüllt ist. Über die Eingangsöffnung 35 wird dieser Härter in die Pumpe 30 gefördert und dosiert. Über den Ausgang 26 wird das Gießharz und über den Ausgang 36 der Härter einer nachgeordneten Mischeinrichtung 40 zugeführt, wo die beiden Medien in bekannter Weise vermischt und von da an über das Gießrohr 41 weiterverarbeitet werden.

Die Arbeitsweise der einzelnen Pumpen 20 und 30 ist bereits anhand der Fig. 1 beschrieben worden. In der vorliegenden Mischeinrichtung werden die beiden Pumpen durch einen Hubzylinder 42 über ein Hebelsystem 43 gemeinsam betätigt. Das Hebelsystem 43 ist am Punkt 43a gelagert, wobei die Abstände a und b das Verhältnis der Kolbenhübe der beiden Pumpen und damit das Mischungsverhältnis bestimmen. Wie anhand der Fig. 1 bereits erläutert wurde, sind die Einlaßventile 9 jeweils unabhängig vom Kolbenhub über die Druckluftzylinder 14 betätigbar.

Die Dosier- und Mischeinrichtung kann über eine zusätzliche Vorrichtung gereinigt werden. Zu diesem Zweck werden Spülventile 44 durch Druckluftzylinder 45 geöffnet, und danach wird über die Eingänge 46 eine Spülflüssigkeit durch die Ausgangskanäle 26 und 36 gepreßt. Die Reste des Fördermediums werden dabei aus der Mischeinrichtung durch den Ausgang 41 in einen Abfallbehälter gepumpt.

**Patentansprüche**

1. Vorrichtung zum Fördern und Dosieren abrasiver Materialien, wie Gießharzen und dergleichen, mit mindestens einer Kolbenpumpe, deren Zylinderraum (2) eine Führung für einen Kolben (3) bildet, über eine Eingangsöffnung (5) mit einem Vorratsbehälter (6) in Verbindung steht und eine Ausgangsöffnung (16) besitzt, dadurch gekennzeichnet, daß der Kolben (3) insgesamt rohrförmig ausgebildet ist, im Bereich der Eingangsöffnung (5) Wanddurchbrüche (8) besitzt und an seiner auslaßseitigen Stirnseite (3a) mit einem im geöffneten Zustand das Einströmen des Mediums in den Zylinder (2) ermöglichenden Einlaßventil (9) verschließbar ist, daß der Führungsspalt (17) zwischen dem Kolben (3) und dem Zylinder (2) größer als die Körnung eines in einem flüssigen Fördermedium befindlichen Füllstoffes ist und daß die tragende Länge der Kolbenführung (17) in Abhängigkeit von dem flüssigen Fördermedium so bemessen ist, daß der auftretende Schlupf die Dosiergenauigkeit nicht beeinträchtigt.

2. Vorrichtung nach Anspruch 1, dadurch gekennzeichnet, daß der Zylinder (2) im Bereich der Eingangsöffnung (5) zu einer ringförmigen Vorratszone (4) erweitert ist.

3. Vorrichtung nach Anspruch 1 oder 2, dadurch gekennzeichnet, daß das Einlaßventil (9) über eine Feder betätigbar ist.

4. Vorrichtung nach Anspruch 1 oder 2, dadurch gekennzeichnet, daß das Einlaßventil (9) über eine im Kolbeninneren angeordnete Ventilstange (13) betätigbar ist.

5. Vorrichtung nach Anspruch 4, dadurch gekennzeichnet, daß eine Betätigungsvorrichtung (14) vorgesehen ist, welche das Einlaßventil (9) im Ruhezustand geöffnet hält.

6. Vorrichtung nach einem der Ansprüche 1 bis 5, dadurch gekennzeichnet, daß die Ausgangsöffnung (16) durch ein federbetätigtes Auslaßventil (10) verschließbar ist.

7. Vorrichtung nach einem der Ansprüche 1 bis 6, dadurch gekennzeichnet, daß die Wanddurchbrüche (8) abgeschrägte bzw. abgerundete Kanten (8a) besitzen.

8. Vorrichtung nach einem der Ansprüche 1 bis 7, dadurch gekennzeichnet, daß mindestens zwei Kolbenpumpen (20, 30) parallel angeordnet sind, deren Eingangsöffnungen (25, 35) an getrennte Vorratsbehälter (22, 32) und deren Ausgänge (26, 36) an eine gemeinsame Mischeinrichtung (40) angeschlossen sind.

9. Vorrichtung nach Anspruch 8, dadurch gekennzeichnet, daß die Kolben (3) der beiden parallel liegenden Pumpen (20, 30) über eine gemeinsame Hebelvorrichtung (43) betätigbar sind.

10. Vorrichtung nach Anspruch 9, dadurch gekennzeichnet, daß über die Hebelvorrichtung (43) unterschiedliche Kolbenhübe einstellbar sind.

**Claims**

1. Apparatus for conveying and dosing abrasive materials, such as casting resins and the like, comprising at least one reciprocating pump the cylinder chamber (2) of which forms a guide for a piston (3), is connected to a storage container (6) through an inlet opening (5) and has an output opening (16), characterised in that the piston (3) as a whole is tubular, has apertures (8) in its wall in the region of the inlet opening (5) and, at its outlet end face (3a) can be closed by means of an inlet valve (9), which allows the medium to flow into the cylinder (2) in the open state; that the guiding clearance (17) between the piston (3) and the cylinder (2) is larger than the grain size of a filling material present in a liquid transport medium; and that, depending upon the liquid transport medium, the supporting length of the piston guide (17) is made such that the slip occurring does not affect the dosing accuracy.

2. Apparatus according to Claim 1, characterised in that, in the region of the inlet opening (5), the cylinder (2) widens to form an annular storage zone (4).

3. Apparatus according to Claim 1 or Claim 2, characterised in that the inlet valve (9) is operable by means of a spring.

4. Apparatus according to Claim 1 or Claim 2, characterised in that the inlet valve (9) can be operated by means of a valve rod (13) which is arranged within the piston.

5. Apparatus according to Claim 4, characterised in that an operating device (14) is provided which keeps the inlet valve (9) open in the rest state.

6. Apparatus according to one of Claims 1 to 5, characterised in that the outlet opening (16) can be closed by a spring-operated outlet valve (10).

7. Apparatus according to one of Claims 1 to 5, characterised in that the wall apertures (8) have bevelled or rounded edges (8a).

8. Apparatus according to one of Claims 1 to 7, characterised in that at least two reciprocating pumps (20, 30) are arranged in parallel, the inlet openings (25, 35) of which are connected to separate storage containers (22, 32) and the outlets (26, 36) of which are connected to a common mixing device (40).

9. Apparatus according to Claim 8, characterised in that the pistons (3) of the two parallel pumps (20, 30) can be operated by a common lever arrangement (43).

10. Apparatus according to Claim 9, characterised in that by means of the lever arrangement (43), different piston strokes can be set.

**Revendications**

1. Dispositif d'entraînement et de dosage de matériaux abrasifs, tels que des résines de coulée et analogues, comportant au moins une pompe à piston, dont la chambre (2) du cylindre forme un guide pour un piston (3), est reliée par l'intermédiaire d'une ouverture d'entrée (5) à un réservoir de stockage (6) et possède une ouverture de sortie (16), caractérisé par le fait que le piston (3) est réalisé globalement avec une forme tubulaire, possède des perçages (8) ménagés dans sa paroi au niveau de l'ouverture d'entrée (5) et peut être fermé, sur sa face frontale (3a) située du côté sortie, par une soupape d'admission (9) permettant, à l'état ouvert, la pénétration du milieu dans le cylindre (2), que la fente de guidage (17) entre le piston (3) et le cylindre (2) est supérieure à la taille des grains d'un matériau de remplissage situé dans un milieu d'entraînement liquide et que la longueur portante du guide (17) du piston est dimensionnée en fonction du milieu d'entraînement liquide de telle sorte que le glissement apparaissant n'affecte pas la précision de dosage.

2. Dispositif suivant la revendication 1, caractérisé par le fait que le cylindre (2) est élargi dans la zone de l'ouverture d'entrée (5) pour former une zone de réserve annulaire (4).

3. Dispositif suivant la revendication 2, caractérisé par le fait que la soupape d'admission (9) peut être actionnée par l'intermédiaire d'un ressort.

4. Dispositif suivant la revendication 1 ou 2, caractérisé par le fait que la soupape d'admission (2) peut être actionnée par l'intermédiaire d'une tige de soupape (13) disposée à l'intérieur du piston.

5. Dispositif suivant la revendication 4, caractérisé par le fait qu'il est prévu un dispositif d'actionnement (14) qui maintient ouverte la soupape d'admission (9) à l'état de repos.

6. Dispositif suivant l'une des revendications 1 à 5, caractérisé par le fait que l'ouverture de sortie (16) peut être obturée par une soupape de sortie (6) actionnée par un ressort.

7. Dispositif suivant l'une des revendications 1 à 6, caractérisé par le fait que les perçages (8) de la paroi possèdent des bords biseautés ou arrondis (8a).

8. Dispositif suivant l'une des revendications 1 à 7, caractérisé par le fait qu'au moins deux pompes à piston (20, 30), dont les ouvertures d'entrée (25, 35) sont raccordées à des réservoirs de stockage (22, 32) et dont les sorties (26, 36) sont raccordées à un dispositif commun de mélange (41), sont disposées en parallèle.

9. Dispositif suivant la revendication 8, caractérisé par le fait que les pistons (3) des deux pompes (20, 30) disposées en parallèle peuvent être actionnés par l'intermédiaire d'un dispositif à leviers commun (43).

10. Dispositif suivant la revendication 9, caractérisé par le fait que des courses différentes des pistons peuvent être réglées par l'intermédiaire du dispositif à leviers (43).

FIG 1

# FIG 2